# EUROPÄISCHE PATENTANMELDUNG

(11) **EP 1 775 265 A2**
(43) Veröffentlichungstag der Anmeldung: **18.04.2007**
(21) Anmeldenummer: 06021670.2
(22) Anmeldetag: 16.10.2006
(51) Int. Cl.: C02F 1/06

(54) **Verfahren und Anordnung zum Reinigen von industriell verunreinigtem Abwasser/Prozesswasser mittels einer Destillationsanlage**

(30) Priorität: 17.10.2005 DE 102005049923
(71) Anmelder: KMU Umweltschutz GmbH, 79688 Hausen (DE)
(72) Erfinder: Hildebrandt, Erich, 79585 Steinen (DE); Hinz, Jutta, 79650 Schopfheim (DE)

(57) **Zusammenfassung**

Bei einem Verfahren zum Reinigen von industriell verunreinigtem Abwasser/Prozesswasser mittels einer Destillationsanlage wird in der Dampfphase ein zusätzlicher Behandlungsschritt durchgeführt, um unerwünschten Restbestandteile insbesondere organische und/oder reaktionsfähige anorganische Stoffe durch einen zusätzlichen Behandlungsschritt abzuscheiden.

## Beschreibung

Die Erfindung betrifft ein Verfahren und eine Anordnung zum Reinigen von industriell verunreinigtem Abwasser/Prozesswasser mittels einer Destillationsanlage.

Häufig sind wässrige Flüssigkeiten im industriellen Bereich wie Abwasser oder Prozesswasser mit organischen oder anorganischen Stoffen verunreinigt.

Beispiele für derartige verunreinigte Flüssigkeiten sind Waschlösungen insbesondere bei Tauch-, Spritz- und Ultraschallreinigungsanlagen. Weitere Beispiele sind Prozesslösungen aus dem Bereich der Oberflächenveredelung, die beim Galvanisieren, Beizen, Anodisieren, Gleitschleifen, Entfetten, Phosphatieren, Brünieren, Pulverbeschichten, Lackieren etc. auftreten. Auch bei Bohr-, Schneid-, Schleif- und Ziehanwendungen sowie im Druckgussbereich werden Emulsionen verwendet, die teilweise stark verunreinigt sind durch Öle, Wachse, Hydraulikflüssigkeiten und/oder glykolhaltige Kühlmittel.

Ebenfalls zu nennen sind Abwässer im Bereich der Pharma-, Textil- und Lebensmittel-Chemie.

Immer strenger werdende gesetzliche Anforderungen und Vorschriften erfordern stetig verbesserte und effizientere Reinigungsmethoden. Für den Anlagebetreiber sind dabei die Anschaffungskosten für die Reinigungsanlage und die laufenden Betriebskosten von großer wirtschaftlicher Bedeutung.

Zur Reinigung von industriell verunreinigten wässrigen Flüssigkeiten werden häufig Destillationsanlagen eingesetzt. Die Anmelderin stellt solche Destillationsanlagen her und vertreibt diese.

Die verunreinigte Flüssigkeit (Abwasser/Prozesswasser) wird in einem Verdampfer verdampft, wobei sich im Verdampfersumpf d. h. in der aufkonzentrierten Flüssigkeit der überwiegende Anteil der unerwünschten Bestandteile sammelt. Dieses Konzentrat, das in der Regel automatisch ausgetragen wird, kann z. B. in Behältern deponiert bzw. anderweitig entsorgt werden.

Durch solche Destillationsverfahren wird das Abwasser/Prozesswasser zu großen Teilen von den unerwünschten Bestandteilen gereinigt. Ein gewisser Anteil von destillativ nicht abtrennbaren Bestandteilen wie z. B. Alkohole, Glykole, Carbonsäuren werden in der Dampfphase mit ausgeschieden und verbleiben deshalb im Destillat, d.h. in der gereinigten Flüssigkeit. Das Destillat kann entweder wiederverwendet oder aber in das öffentliche Abwassemetz eingespeist werden.

Steigende nationale und internationale Anforderungen basierend auf Richtlinien der EU, Bundesgesetzen (Wasserhaushaltsgesetz WHG, Abwasserabgabengesetz AbwAG), Verordnungen (Abwasserverordnung AbwV, Indirekteinleiterverordnung IndVO) erfordern eine immer bessere Reinigungseffizienz, so dass neben den Destillationsverfahren teilweise noch andere Verfahren eingesetzt werden. In der Tabelle 1 sind verschiedene weitere Reinigungsverfahren mit ihren Wirkungsweisen und deren spezifische Nachteile aufgelistet.

Alle diese Verfahren erfordern jedoch einen der Destillationsanlage nachgeschalteten separaten Anlageteil wobei die Behandlung des Destillats in der kondensierten, flüssigen Phase, erfolgt.

Aufgabe der Erfindung besteht darin, ein Verfahren zur Reinigung von industriell verunreinigtem Abwasser/Prozesswasser mittels einer Destillationsanlage anzugeben, das die oben angegebenen Nachteile nicht aufweist, das insbesondere eine effiziente und vollständige Reinigung des Abwassers erlaubt und das außerdem kostengünstig und auch energiesparend ist.

Gelöst wird diese Aufgabe durch die nachfolgenden im Anspruch 1 angegebenen Verfahrensschritte zum Reinigen von industriell verunreinigtem Abwasser/Prozesswasser mittels einer Destillationsanlage:
A) Zuführung der verunreinigten Flüssigkeit in eine Verdampfereinheit
B) Verdampfung der Flüssigkeit in der Verdampfereinheit
C) Abbau der in der Dampfphase neben Wasserdampf enthaltenen unerwünschten Restbestandteile insbesondere organische und/ oder reaktionsfähige anorganische Stoffe durch einen zusätzlichen Behandlungsschritt in der Dampfphase
D) Abscheiden des von den unerwünschten Restbestandteilen befreiten Wasserdampfs in einem Kondensator

Die wesentliche Idee der Erfindung besteht darin, bei einer Destillationsanlage direkt in der Dampfphase einen weiteren Reinigungsschritt vorzusehen, bei dem durch zusätzliche Maßnahmen, die in der Dampfphase noch vorhandenen unerwünschten Restbestandteile, in nicht störende Stoffe, idealerweise bis zu CO₂ und Wasser, abgebaut werden.

Ein wesentlicher Vorteil der Erfindung besteht in der sehr hohen Reinigungseffizienz.

Außerdem findet keine Verlagerung der unerwünschten Stoffe durch Adsorption bzw. Filterung statt. Die unerwünschten Bestandteile werden abgebaut.

Zusätzlich arbeitet das Verfahren sehr energiesparend und kostengünstig.

Wie in den Ansprüchen 2 bis 4 angegeben, kann der zusätzliche Behandlungsschritt durch ein Plasma, eine thermische Oxidation bzw. die Einstrahlung von UV-Licht bewirkt werden.

Jede dieser Maßnahmen sorgt dafür, daß die unerwünschten Restbestandteile weitgehend in nicht störende Stoffe abgebaut werden.

Zur Unterstützung des Reinigungseffekts während des zusätzlichen Behandlungsschritts können, wie in Anspruch 5 angegeben, Hilfsstoffe bzw. Reaktionspartner dem Dampfstrom zugeführt werden.

Alternativ kann hierfür auch, wie in Anspruch 6 angegeben, ein Katalysator eingesetzt werden

Es ist nicht unbedingt notwendig, daß der gesamte Dampfstrom dem zusätzlichen Behandlungsschritt unterworfen wird. Durch das Zusammenführen von den beiden Teilströmen, wobei einer der beiden Teilströme dem Behandlungsschritt unterworfen wurde, kann eine Nachreaktion eingeleitet werden, die eine zusätzliche Reinigung bewirkt (Anspruch 7).

In Anspruch 8 ist eine Anordnung einer Destillationsanlage zur Durchführung des erfindungsgemäßen Verfahrens beansprucht. Wesentlich hierbei ist, in einer an sich bekannten Destillationsanlage für den zusätzlichen Behandlungsschritt im Dampfbereich eine Behandlungseinheit vorzusehen.

Nachfolgend ist die Erfindung anhand eines in der Zeichnung dargestellten Ausführungsbeispiels näher erläutert.

Es zeigen:
- Fig. 1: Blockbild einer erfindungsgemäßen Anordnung einer Destillationsanlage nach einem ersten Ausführungsbeispiel
- Fig. 2: Blockbild einer erfindungsgemäßen Anordnung einer Destillationsanlage nach einem zweiten Ausführungsbeispiel
- Fig. 3: Blockbild einer erfindungsgemäßen Anordnung einer Destillationsanlage nach einem dritten Ausführungsbeispiel

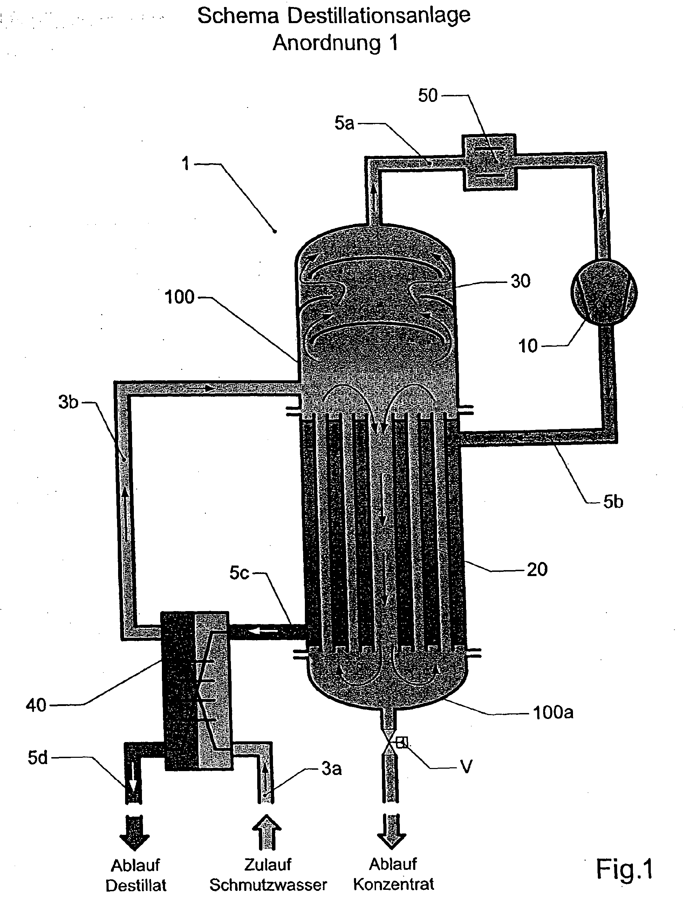

Fig. 1 zeigt eine erfindungsgemäße Anordnung einer Destillationsanlage 1 mit einem Behälter 100 in dem die industriell verunreinigte wässrige Flüssigkeit (Abwasser/Prozesswasser) behandelt wird.
Über eine Zuführleitung 3a, 3b wird die wässrige Flüssigkeit dem Behälter 100 zugeführt. Zwischen den Leitungsabschnitten 3a, 3b ist ein Destillatkühler 40 vorgesehen.
Der Behälter 100 weist im Wesentlichen eine Verdampfer-/Kondensatoreinheit 20 und einen Nebelabscheider 30 auf.
Über die Ablaufleitung 5, unterteilt in mehrere Leitungsabschnitte 5a, 5b, 5c, 5d wird der gereinigte Wasserdampf über einen Brüdenverdichter 10 abgepumpt. Der Brüdenverdichter 10 sorgt für die zur Verdampfung/Kondensation notwendigen Druckverhältnisse in der Destillationsanlage 1.
Der Leitungsabschnitt 5b der Ablaufleitung führt zu der Verdampfer-/Kondensatoreinheit 20 in der der Wasserdampf kondensiert. Über den Leitungsabschnitt 5c wird das Kondensat dem Kondensatkühler 40 zugeführt. Der Kondensatkühler 40 dient gleichzeitig als Vorwärmer für das über die Zuführleitung 3 zufließende Abwasser/Prozesswasser.

Erfindungsgemäß ist in der Ablaufleitung 5a vor dem Brüdenverdichter 10 eine Behandlungseinheit 50 angeordnet. In dieser Einheit findet die zusätzliche Reinigung des Wasserdampfs statt.

In der Behandlungseinheit 50 wird der zusätzliche Behandlungsschritt durch die Erzeugung eines Plasmas, durch eine thermische Oxidation oder durch Einstrahlung von UV-Licht bewirkt.

Die Destillationsanlage 1 lässt sich im Wesentlichen in drei Bereiche einteilen. Einem Verdampfungsbereich der durch die Oberfläche der . Verdampfer-/Kondensatoreinheit 20 vorgegeben ist, einem Kondensationsbereich der durch das Innere der Verdampfer-/Kondensatoreinheit 20 vorgegeben ist und einem Dampfbereich in dem vorwiegend Wasserdampf vorliegt, der den oberen Bereich des Behälters 100 und die Ablaufleitungen 5a, 5b umfasst.

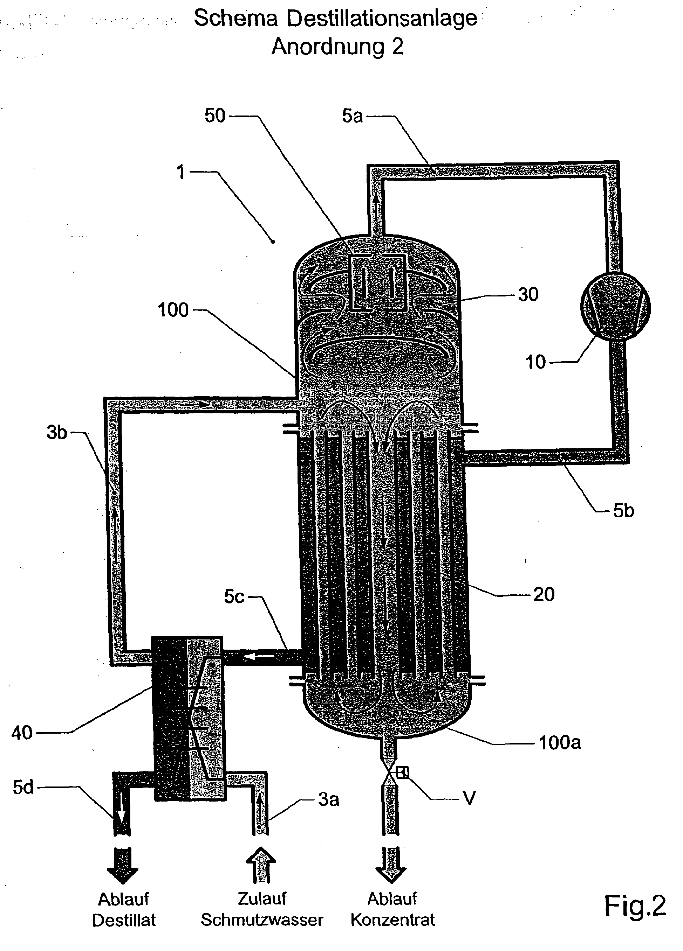

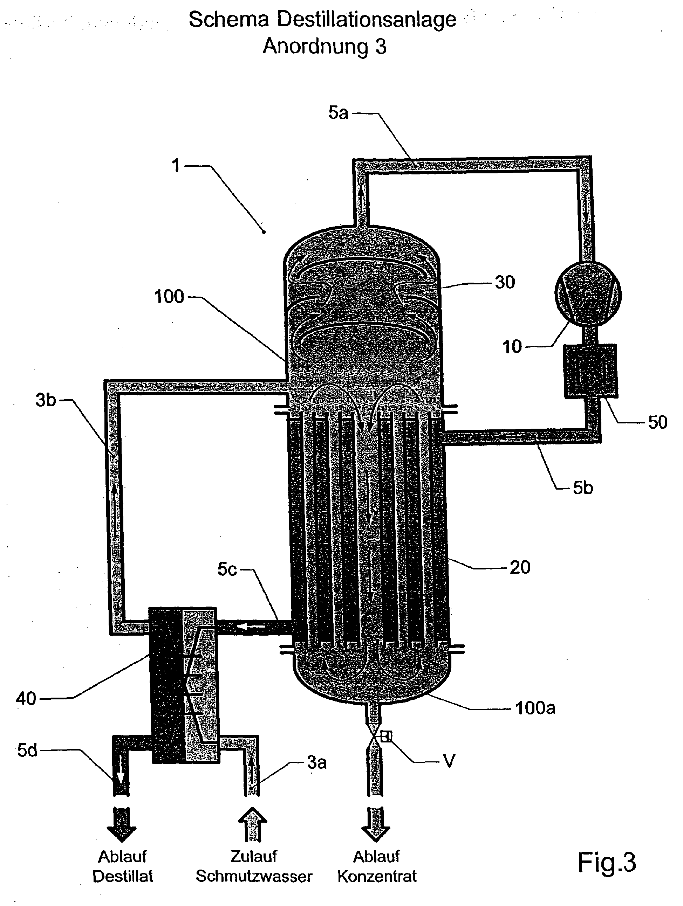

In den Fig. 2 und 3 sind alternative Ausgestaltungen der Erfindung dargestellt. Wie in Fig. 2 dargestellt, ist die Behandlungseinheit 50 im Oberbereich des Behälters 100, d. h. oberhalb der Verdampfer-/Kondensatoreinheit 20 angeordnet.
In Fig. 3 ist die Behandlungseinheit 50 in der Ablaufleitung 5b also nach dem Brüdenverdichter 10 angeordnet.

Bei allen drei Ausgestaltungen der Erfindung ist die Behandlungseinheit 50 im Dampfbereich der Destillationsanlage angeordnet.

Nachfolgend ist das erfindungsgemäße Verfahren näher erläutert.

Die zu reinigende Flüssigkeit wie z. B. eine Emulsion aus dem Leichtmetalldruckgussbereich, enthält als Verunreinigungen z. B. Silikone, Siloxane, Glykole, Alkohole, Wachse, Öle, Amine, Emulgatoren, Tenside, Salze (z. B. Härtesalze des Wassers, Leichtmetallkationen). Weiterhin können z. B. noch thermische und/oder bakterielle Abbauprodukte aus diesen Inhaltsstoffen, wie z. B. Carbonsäuren oder sonstige niedermolekularen Abbauprodukte vorhanden sein.

Die verunreinigte Flüssigkeit wird über die Zuführleitung 3 in einem Verfahrensschritt A der Verdampfereinheit 20 zugeführt.

Mit Hilfe der Verdampfereinheit 20 wird in einem Verfahrensschritt B diese Flüssigkeit verdampft.
Der Großteil der unerwünschten Bestandteile wie z.B. Silikone, Siloxane, Glykole, Wachse, Öle, Amine, Emulgatoren, Tenside, Salze verbleibt im zurückbleibenden Verdampfersumpf, der sich am Behälterboden 100a sammelt.
Gewisse unerwünschte Bestandteile wie z. B. Anteile von Glykolen, Alkoholen, Aminen, Carbonsäuren, feinste Ölaerosole gehen jedoch mit dem Wasserdampf in die Gasphase über und steigen im Behälter 100 auf. Der Dampfstrom im Behälter 100 ist durch die Pfeile gekennzeichnet. Am Nebelabscheider werden die Flüssigkeitstropfen abgeschieden und der Wasserdampf steigt weiter auf. Noch befinden sich jedoch unerwünschte Restbestandteile von gut wasserlöslichen Stoffen wie z. B. Anteile von Glykolen, Alkoholen, Aminen, Carbonsäuren im Wasserdampf.
In der Behandlungseinheitseinheit 50 werden diese unerwünschten Restbestandteile durch Herstellung einer reaktiven Atmosphäre, induziert z. B. durch Erzeugung eines Plasmas, durch thermische Oxidation oder durch Einstrahlung von UV-Licht in nicht störende Stoffe, idealerweise bis zu CO₂ und Wasser umgewandelt (Verfahrensschritt C).
Der nun von den unerwünschten Bestandteilen gereinigte Wasserdampf wird vom Brüdenverdichter 10 abgesaugt und der Verdampfer-/Kondensatoreinheit 20 zugeführt, in deren Inneren der Wasserdampf abgeschieden wird (Verfahrensschritt D).
Alternativ dazu kann der Wasserdampf direkt oberhalb des Nebelabscheiders 30 also noch innerhalb des Behälters 100, in einer dort vorgesehenen Behandlungseinheit 50, behandelt werden.
Als weitere Variante kann der Wasserdampf auch über die Absaugleitung 5 zuerst vom Brüdenverdichter 10 abgesaugt und verdichtet werden, bevor in einer nachgeschalteten Behandlungseinheit 50 der zusätzliche Behandlungsschritt im verdichteten überhitzten Wasserdampf erfolgt.

Das gereinigte Abwasser/Prozesswasser (Destillat) wird im Destillatkühler 40 weiter abgekühlt und über die Ablaufleitung 5d abgeführt. Durch die Abkühlung im Destillatkühler 40 wird gleichzeitig das Abwasser/Prozesswasser in der Zulaufleitung 3 vorgewärmt.

Der wesentliche Vorteil der Erfindung ist darin zusehen, dass der Wasserdampf vor der Kondensation zu Wasser einem weiteren Reinigungsschritt unterzogen wird.

Die Problematik der Mehrphasenreaktionen (gasförmig/flüssig, flüssig/flüssig) beim Arbeiten in der wässrigen Phase wird dadurch umgangen. Bei Mehrphasenreaktionen sind Stoffübergänge z. B. aus der Gas- in die Flüssigphase (Beispiel: Ozoninjektoren bei Ozonoxidation) oder zwischen mehreren Flüssigphasen ( Beispiel: Nassoxidation in Mikroemulsionen, die flüssig/flüssig Systeme darstellen) ein entscheidender, die Reaktion limitierender, Faktor.

Der Stofftransportwiderstand zwischen mehreren Phasen wird bei der erfindungsgemäßen Arbeitsweise, die Reaktionsmittel (Ozon, Ionen, Radikale, UV-Strahlung, elektromagnetische Strahlung) direkt im System - nämlich direkt in der Wasserdampfphase - zu erzeugen, eliminiert.

In der wässrigen Phase ist durch den Absorptionskoeffizienten von Wasser für die jeweilige Wellenlänge der verwendeten Strahlung, die Schichtdicke der eigentlichen Reaktionszone vorgegeben und die Effizienz des Reaktors abhängig von den Stofftransportgeschwindigkeiten in dieser Reaktionszone.

Bei dem erfindungsgemäßen Verfahren sind durch das Arbeiten in der Dampfphase deutlich geringere Beeinträchtigungen hinsichtlich limitierter Reaktionszone, beschränkter Strahlungseindringtiefen bzw. kurzer Wegstrecken der aktivierten Teilchen infolge molekularer Wechselwirkungen zu erwarten.

Das erfindungsgemäße Verfahren erfordert eine wesentlich geringere zusätzliche Energiezufuhr, die andererseits anlagentechnisch wiederum genutzt werden kann.

Wie oben bereits erwähnt kann der zusätzliche Behandlungsschritt durch unterschiedliche Maßnahmen realisiert werden wie Plasmaerzeugung, thermische Oxidation oder Einstrahlung von UV-Licht.

Durch eine zusätzliche Dosierung von Hilfsstoffen bzw. Reaktionspartnern kann der Reinigungseffekt währen des zusätzlichen Behandlungsschritts noch weiter verbessert werden.

Denkbar ist auch zur Unterstützung der zusätzlichen Reinigung einen Katalysator einzusetzen.

Wie in Anspruch 7 angegeben wird gemäß einer alternativen Ausgestaltung der Erfindung nur ein Teilstrom des Wasserdampfs in der Behandlungseinheit 50 behandelt. Der andere Teilstrom des Wasserdampfs wird erst nach der Behandlungseinheit 50 zugeführt. Dadurch kann eine Nachreaktion stattfinden, die ebenfalls eine intensive Reinigung bewirkt.
Zur Durchführung des erfindungsgemäßen Verfahrens ist eine entsprechende Anordnung einer Destillationsanlage notwendig. Hierbei ist wichtig, dass die Behandlungseinheit 50 wie in den Figuren 1, 2 und 3 dargestellt im Dampfbereich der Destillationsanlage angeordnet ist.

**Tabelle 1 :**

| **Verfahren** | **Wirkungsweise** | **Nachteile** |
|---|---|---|
| Aktivkohlebehandlung | Adsorption an Aktivkohle | Verlagerung, d.h. unerwünschte Stoffe werden nicht abgebaut, nicht alle unerwünschte Stoffe sind adsorbierbar, Regeneration bzw. Entsorgung erforderlich |
| lonentauscherverfahren | Adsorption an Kationen/Anionentauscher | Verlagerung, d.h. unerwünschte Stoffe werden nicht abgebaut, nur ionische Inhaltsstoffe sind adsorbierbar, Regeneration bzw. Entsorgung erforderlich |
| Membranverfahren | Abtrennung durch Filtration z. B. Ultrafiltration, Umkehrosmose | Verlagerung, d.h. unerwünschte Stoffe werden nicht abgebaut, Membranen sind empfindlich bei Produktwechsel, hoher Reinigungsaufwand |
| Biologischer Abbau | Abbau durch Mikroorganismen | Unerwünschte Stoffe unterschiedlicher Natur sind bei Produktwechsel schlecht abzubauen, nicht alle unerwünschten Stoffe sind abbaubar, sehr voluminöse Apparaturen, lange Verweilzeiten, viele Störparameter, sehr hohe Investitionskosten |
| Nassoxidation Niederdruck/Hochdruck | chemische Zerstörung | sehr voluminöse Apparaturen, sehr hohe Investitionskosten, hoher Chemikalienverbrauch |
| Katalytische UV-Behandlung | chemische Zerstörung | hoher Chemikalienverbrauch, teilweise unvollständige Reaktionen, geringe Eindringtiefe der UV-Strahlung |

### Bezugszeichenliste

| | |
|---|---|
| Destillationsanlage | 1 |
| Zuführleitung | 3 |
| Ablaufleitung | 5 |
| Brüdenverdichter | 10 |
| Verdampfer-/Kondensatoreinheit | 20 |
| Nebelabscheider | 30 |
| Destillatkühler | 40 |
| Behandlungseinheit | 50 |
| Behälter | 100 |
| Behälterboden | 100a |

## Patentansprüche

1. Verfahren zum Reinigen von industriell verunreinigtem Abwasser/Prozesswasser mittels einer Destillationsanlage **gekennzeichnet durch** folgende Verfahrensschritte:
A) Zuführung der verunreinigten Flüssigkeit in eine Verdampfereinheit
B) Verdampfung der Flüssigkeit in der Verdampfereinheit
C) Abbau der in der Dampfphase neben Wasserdampf enthaltenen unerwünschten Restbestandteile insbesondere organische und/oder reaktionsfähige anorganische Stoffe **durch** einen zusätzlichen Behandlungsschritt in der Dampfphase
D) Abscheiden des von den unerwünschten Restbestandteilen befreiten Wasserdampfs in einem Kondensator

2. Verfahren nach Anspruch 1, **dadurch gekennzeichnet, dass** als zusätzlicher Behandlungsschritt die Erzeugung eines Plasmas erfolgt.

3. Verfahren nach Anspruch 1, **dadurch gekennzeichnet, dass** als zusätzlicher Behandlungsschritt eine thermische Oxidation erfolgt.

4. Verfahren nach Anspruch 1, **dadurch gekennzeichnet, dass** als zusätzlicher Behandlungsschritt die Einstrahlung von UV-Licht erfolgt.

5. Verfahren nach Anspruch 1, 2,3 und 4, **dadurch gekennzeichnet, dass** vor oder während des zusätzlichen Behandlungsschritts eine Dosierung von Hilfsstoffe/Reaktionspartner erfolgt.

6. Verfahren nach Anspruch 1, 2, 3, 4 und 5, **dadurch gekennzeichnet, dass** beim zusätzlichen Behandlungsschritt ein Katalysator eingesetzt wird.

7. Verfahren nach Anspruch 5, **dadurch gekennzeichnet, dass** ein Teilstrom des Wasserdampfs dem zusätzlichen Behandlungsschritt unterworfen wird und anschließend mit dem übrigen Teilstrom zusammengeführt wird, um eine Nachreaktion einzuleiten.

8. Anordnung zum Reinigen von industriell verunreinigtem Abwasser/Prozesswasser mittels einer Destillationsanlage wobei die Anordnung aus einer herkömmlichen Destillationsanlage besteht, die im wesentlichen in 3 Bereiche unterteilt ist, einen Verdampfungsbereich, einen Kondensationsbereich und einen Dampfbereich, **dadurch gekennzeichnet, dass** im Dampfbereich der Destillationsanlage zusätzlich eine Behandlungseinheit vorgesehen ist, in der durch einen oder mehrere zusätzliche Behandlungsschritte eine Reaktion in der Dampfphase bewirkt wird, durch die unerwünschte Restbestandteile insbesondere organische und/ oder reaktionsfähige anorganische Stoffe aus dem Wasserdampf abgebaut werden.
